# EUROPÄISCHE PATENTSCHRIFT

(11) **EP 3 022 145 B1**
(45) Veröffentlichungstag und Bekanntmachung des Hinweises auf die Patenterteilung: **30.05.2018**
(21) Anmeldenummer: 14789788.8
(22) Anmeldetag: 14.10.2014
(51) Int. Cl.: B66B 1/34

(54) **CODIERUNGSVORRICHTUNG SOWIE POSITIONSBESTIMMUNGSVORRICHTUNG UND -VERFAHREN**
CODING AND POSITION DETERMINATION DEVICE AND METHOD
APPAREIL ET PROCÉDÉ DE CODAGE ET DE DÉTERMINATION DE LA POSITION

(30) Priorität: 14.10.2013 EP 13004910
(43) Veröffentlichungstag der Anmeldung: 25.05.2016
(73) Patentinhaber: Cedes AG, 7302 Landquart (CH)
(72) Erfinder: SCHATT, Michael, CH-8808 Pfäffikon (CH); GRAF, Marco, CH-9472 Grabs (CH)
(74) Vertreter: Otten, Roth, Dobler & Partner mbB Patentanwälte
(86) Internationale Anmeldenummer: PCT/EP2014/002764
(87) Internationale Veröffentlichungsnummer: WO 2015/055298

(56) Entgegenhaltungen:
- EP-A1- 2 540 651
- EP-B1- 0 722 903
- US-A- 4 433 756

## Beschreibung

Die Erfindung betrifft ein computerimplementiertes Verfahren zur Bestimmung der Position einer Aufzugkabine in einem Aufzugschacht, eine Codierungsvorrichtung zur Markierung von Positionen in einem Aufzugschacht und zur Positionsbestimmung der Position von Aufzugkabinen im Aufzugschacht und eine Positionsbestimmungsvorrichtung zur Bestimmung der Position einer Aufzugskabine in einem Aufzugschacht anhand einer Codierungsvorrichtung.

Aus dem Stand der Technik ist beispielsweise aus der EP 0 722 903 B1 ein Verfahren bekannt, bei dem eine Aufzugkabine im Aufzugschacht entlang einem Codeband verfahren wird, wobei die Aufzugkabine über einen Detektor verfügt und dann, wenn der Detektor auf ein Bildmuster stößt, das am Codeband angebracht ist, dieses mit einem Referenzmuster verglichen und aus dem erkannten Muster eine Information für die Steuerung abgeleitet wird.

Aufgabe der Erfindung ist es, ein Codeband, ein Positionsbestimmungsverfahren sowie eine Positionsbestimmungsvorrichtung bereitstellen zu können, die eine erhöhte Sicherheit beim Betrieb des Aufzugs ermöglichen.

Die Aufgabe wird, ausgehend von einer Codierungsvorrichtung, einem Positionsbestimmungsverfahren sowie einer Positionsbestimmungsvorrichtung der eingangs genannten Art, durch die Merkmale der Ansprüche 1, 8 und 13 gelöst.

Durch die in den Unteransprüchen genannten Maßnahmen sind vorteilhafte Ausführungen und Weiterbildungen der Erfindung möglich.

Die Erfindung stellt zum einen ein Codeband zur Verfügung, bei dem zwar diskrete Positionen markiert werden, diese jedoch in einer solchen Dichte angebracht sein können, dass die Aufzugkabine praktisch permanent ihre Position auslesen kann. Die Kontrolleinheit zur Kontrolle der Aufzugfahrt, das heißt deren Regelung und/oder Steuerung, kann also permanent mit der Information über die aktuellen Position der Fahrkabine versorgt werden, und es gibt praktisch keine Wegstrecken, auf denen die Fahrkabine "blind", das heißt ohne konkrete Positionsinformation verfahren wird und erst dann reagieren kann, wenn sie auf eine Markierung stößt, welche zum Beispiel das Abbremsen der Kabine veranlassen soll. Durch diese Maßnahme wird ein hohes Maß an Sicherheit beim Betrieb des Aufzugs ermöglicht. Zudem bietet die Erfindung einen zuverlässigen und sicheren Betrieb der Aufzugkabine, weil die Art der Codierungsvorrichtung und des computerimplementierten Verfahrens zur Positionsbestimmung Überprüfungsmöglichkeiten, Redundanzen und Plausibilitätsprüfungen ermöglicht, durch welche hohe Sicherheitsstandards erreicht werden können. Insbesondere wird es auch ermöglicht, Positionen dann noch auslesen zu können, wenn das Codeband zum Beispiel verschmutzt wird und aufgrund dessen nicht mehr alle dort enthaltenen Informationen ausgelesen werden können.

Ein weiterer Vorteil der Erfindung besteht darin, dass gerade im Zusammenhang mit der Verwendung einer Codierungsvorrichtung gemäß einem Ausführungsbeispiel der Erfindung mit Lagerungsvorrichtungen zudem die Möglichkeit besteht, den Prozess des Sich-Setzens eines neu gebauten Gebäudes bei der Auswertung und Positionsbestimmung der Aufzugkabine berücksichtigen zu können und sogar eine Korrektur der Positionsbestimmung durchführen zu können. Neu errichtete Gebäude besitzen meist die Eigenschaft, dass sie sich mit der Zeit "setzen", das heißt aufgrund der hohen Gewichtsbelastungen es im Laufe der Zeit zu Stauchungen im Gebäude kommen kann. Gerade bei hohen Gebäuden, die meist über einen Aufzug verfügen, kann dieser Effekt auftreten. Besonders problematisch ist an diesem bauphysikalischen Effekt, dass nicht alle Teile des Gebäudes gleichmäßig davon betroffen sind. Insbesondere ist in der Regel das Aufzuggerüst, in dem die Fahrkabine verfahrbar gelagert ist, nicht oder zumindest nur teilweise davon betroffen. In einem solchen Fall bedeutet das teilweise Stauchen der Gebäudewand, dass sich auch die Fahrkabinen gegenüber dem Gestell des Aufzugsschachts verschieben. Eine derartige Korrektur, welche durch die Erfindung ebenfalls ermöglicht wird, kann dieses Phänomen des Sich-Setzens eines Gebäudes ausgleichen. Hierdurch kann insbesondere die Sicherheit und Zuverlässigkeit beim Betrieb des Aufzugs erhöht werden.

Die erfindungsgemäße Codierungsvorrichtung dient zur Markierung von Positionen in einem Aufzugsschacht und zur Positionsbestimmung der Position von Aufzugkabinen im Aufzugschacht. Sie umfasst ein Codeband, welches beispielsweise im Aufzugsschacht an der Schachtwand im Bereich des oberen Endes des Schachts aufgehängt und befestigt ist. Über eine Lagerungsvorrichtung ist das Codeband im Aufzugsschacht beweglich gelagert. Wenn sich das Gebäude beispielsweise setzt und zum Teil ineinander gestaucht wird, kann sich entsprechend das Codeband zusammen mit der Decke des Gebäudes nach unten bewegen und dennoch weiterhin frei hängen, weil es innerhalb der Lagerungsvorrichtungen beweglich gelagert ist und nicht festgehalten wird. Dementsprechend muss sich das frei hängende Codeband auch nicht beim Sich-Setzen des Gebäudes biegen oder stauchen. Die Markierungen auf dem Codeband sind entlang dessen Länge angebracht, zum Beispiel äquidistant. Die Markierungen können als Barcode, besonders jedoch bevorzugt als 2D-Code (zweidimensionaler Code) ausgebildet sein. Die Codemarkierungen können durch matt schwarze und reflektierend weiße Quadrate gebildet sein. Ein derartiger 2D-Code erreicht optisch zum einen eine besonders vorteilhafte, vereinfachte Detektion, aber auch eine hohe Dichte an Codierungsmöglichkeiten.

Grundsätzlich kann ein Barcode in einer Zeile angeordnet werden, desgleichen kann aber auch entsprechend ein 2-D-Code (zweidimensionaler Code) vorgesehen sein. Ein 2-D-Code ist regelmäßig als Matrix ausgebildet, wobei die einzelnen Matrixelemente hell oder dunkel, das heißt die Werte 1 oder 0 bilden können. Eine oder mehrere Zeilen können zusammen als ein Positionsmuster eine diskrete Position als solche markieren. Besonders vorteilhaft ist an dieser Art der Markierungen, dass diese nicht nur einfach detektiert und ausgelesen werden können, sondern auch mittels eines Algorithmus dekodierbar sind und mathematisch verarbeitet werden können. Hierdurch wird ebenfalls der Vorteil erreicht, dass aufwendige Bildvergleiche mit Referenzmustern vermieden werden können, die zum einen fehleranfälliger sein können, zum anderen aber auch Rechner mit hoher graphischer Rechenleistung erfordern und zudem Speicher hoher Kapazität zur Abspeicherung der Referenzmuster notwendig machen. Gemäß der Erfindung kann der mathematische Algorithmus mit Hilfe eines Rechners gegebenenfalls sogar mittels eines einfachen Mikrocontrollers oder Mikroprozessors ausgewertet werden. Durch diesen Zeitvorteil wird auch ermöglicht, dass die Markierungen sehr rasch ausgewertet werden können, sodass auch bei hoher Markierungsdichte die Fahrkabine während ihrer Fahrt im Aufzugschacht permanent über ihre Position informiert sein kann.

Dementsprechend umfasst das erfindungsgemäße computerimplementierte Verfahren einen Verfahrensabschnitt zur Bildaufbereitung, einen zur Positionsmusteranalyse und einen zur Referenzmarkierungsanalyse. Die Bildaufbereitung erfolgt durch eine optische Aufnahme eines Abschnitts des Codebands sowie mindestens eines Abschnitts einer Markierungsvorrichtung, wobei die Markierungsvorrichtung gleichzeitig zur Befestigung bzw. zur Lagerung am Aufzugsschacht dient. Das Ergebnis der optischen Aufnahme ist ein aus Pixeln bestehendes Pixelbild. In diesem Abschnitt des Verfahrens liegt zunächst lediglich die graphische Information der optischen Aufnahme vor.

Anschließend wird aus der rein graphischen Information eine Positionsmusteranalyse durchgeführt. Dazu werden die Codemarkierungen als solche identifiziert. Bei einem Barcode oder 2D-Code werden entsprechend die Bereiche unterschiedlicher Helligkeit als solche aus dem Pixelbild erkannt. Aus den gewonnenen Codemarkierungen wird ein Positionsmuster bestimmt. Das Positionsmuster selbst hängt von der Art und Weise der Codierung ab. Beispielsweise ist es denkbar, dass eine Codierung lediglich eine Zeile umfasst. Insbesondere dann, wenn die Schachtlänge jedoch sehr groß ist, müssen gegebenenfalls insgesamt mehr Markierungen zur Verfügung gestellt werden, sodass auch ein entsprechender Code mit mehr Codierungsmöglichkeiten notwendig ist. In diesem Fall kann das Positionsmuster auch mehrere Zeilen umfassen. Zur Positionsmustererkennung sind verschiedene Möglichkeiten denkbar. Beispielsweise kann der Code so gewählt werden, dass anhand besonderer Zusatzmarkierungen oder integrierter Markierungen, zum Teil auch im Code selbst das Positionsmuster unmittelbar bei der Positionsmusteranalyse erkannt wird, also insbesondere, welche Zeilen zu einem Positionsmuster gehören und welche nicht. Das Positionsmuster kann sodann in einen Binärcode umgewandelt werden und der Binärcode kann, sofern er nicht unmittelbar eine Positionsangabe darstellt, zu einer Position dekodiert bzw. umgewandelt werden.

Ein weiterer Verfahrensschritt besteht in der Referenzmarkierungsanalyse, wozu mindestens eine Zeile des Pixelbildes oder der Codemarkierung im Bereich für zu erwartende Codemarkierungen ausgelesen wird.

Im Gegensatz zur Positionsmusteranalyse, bei der es zunächst um den Erhalt des Binärcodes und der entsprechenden Position geht, ist es hier zwar denkbar, einen Binärcode auszulesen und zu analysieren. In der Regel kann die Auswertung allerdings noch schneller erfolgen, wenn lediglich eine Umwandlung der ausgelesenen Pixel oder Gruppen von benachbarten Pixeln zu Zahlencodes, insbesondere zu Graustufenwerten vorgenommen werden. Die Graustufenwerte können oftmals unmittelbar aus dem aufgenommenen Pixelbild heraus entnommen werden. Diese Zahlencodes, beispielsweise die Graustufenwerte, können insbesondere aufsummiert werden und sodann mit einem Schwellenwert verglichen werden. Wenn es sich um eine Referenzmarkierung handelt, kann dies anhand des Schwellenwertes festgestellt werden. Wurde jedoch keine Referenzmarkierung detektiert, sondern lediglich eine Code-Zeile, so wird durch den Vergleich diese Identifizierung deutlich. Die Referenzmarkierungsanalyse bedeutet zum einen ein höheres Maß an Sicherheit, weil entsprechende Referenzen zur Verfügung stehen und diese im üblichen Betriebsablauf mit ausgelesen werden können. Insbesondere ist auch die Auswertungsmethode zur Erkennung von Referenzmarkierungen, gerade dann, wenn lediglich die ermittelten Graustufen verwendet werden, ohne größeren Rechenaufwand schnell möglich.

Bei einem bevorzugten Ausführungsbeispiel der Erfindung erfolgt eine Positionszuweisung dadurch, dass einer Referenzmarkierung eine Position zugeordnet wird, und zwar in Abhängigkeit von der Position eines Positionsmusters, wobei die Identifizierung der Referenzmarkierung und die Dekodierung der Position grundsätzlich aufgrund desselben Pixelbildes erfolgen können.

Zum einen kann vorbekannt sein, an welchen Stellen eine entsprechende Referenzmarkierung zu erwarten ist. Insbesondere kann auch die Referenzmarkierung Teil der codierten Position sein. Der Code kann vorteilhafterweise so gestaltet werden, dass auch bei Überdeckung eines Teils des Bildmusters durch die Referenzmarkierung die Positions- und die Referenzmarkierung noch auslesbar sind. Insbesondere dann, wenn das Positionsmuster mehrere Zeilen umfasst, und die Referenzmarkierung bei vollständiger Aufnahme das Positionsmuster nicht vollständig abdeckt, kann bei entsprechender Wahl des Codes die verbleibende, nicht von der Referenzmarkierung überdeckte Markierung ausreichen, um die Position durch Decodierung zu ermitteln. Diese Positionsangabe kann dann sogar unmittelbar der Referenzmarkierung zugewiesen werden. Auch ist ein Vergleich zwischen der ermittelten Position der Referenzmarkierung und einer Soll-Position der Referenzmarkierung unmittelbar möglich, wenn vorbekannt ist, an welcher Stelle sich eine entsprechende Referenzmarkierung befinden sollte.

In einer Ausführungsform der Erfindung wird das Pixelbild als Graustufenbild aufgenommen. Diese Maßnahme ist insbesondere vorteilhaft, weil es zu Reflexionen kommen und eine reine Schwarz-Weiß-Unterscheidung somit technisch zu Problemen führen kann. Auch bei ungleichmäßigem Lichteinfall auf das Codeband können sich in der Aufnahme verschiedene Graustufen ergeben. Die Verwendung von Graustufen ist daher auch dann, wenn im Grunde lediglich ein Binärcode dekodiert werden soll, vorteilhaft, wobei ein Schwellenwert gesetzt werden kann. Anhand des Schwellenwertes kann den einzelnen, aufgenommenen Bereichen, die in Graustufen vorliegen, im Binärcode entweder 0 oder 1 zugeordnet werden, je nachdem, ob der Grauwert unter oder über dem Schwellenwert liegt. Dementsprechend kann vorteilhafterweise ein Graustufenschwellwert gesetzt werden, durch den eine Umwandlung in ein Schwarz-Weiß-Bild erfolgt. Der Schwellenwert kann gegebenenfalls auch an die Aufzugsbedingungen und an die Lichtverhältnisse angepasst werden.

Die Position der Referenzmarkierung kann zu verschiedenen Zeiten gespeichert werden. Gerade dann, wenn überprüft werden soll, ob zum Beispiel durch Setzungsvorgänge des Gebäudes die Referenzmarkierung gegenüber dem Codeband verschoben ist, ist es vorteilhaft, verschiedene Positionen entsprechend zur Verfügung zu haben. Außerdem ist beim Vorgang des Sich-Setzens des Gebäudes die tatsächliche Verschiebung an bestimmten Stellen unterschiedlich, da sich der Effekt über die Länge des Aufzugsschachtes von oben nach unten hin verstärkt. Über verschiedene, dekodierte Referenzmarkierungen hinweg kann entsprechend ein Vergleich zu verschiedenen Zeitpunkten während der Kabinenfahrt durchgeführt werden. Dies ermöglicht es, relativ einfach und während des üblichen Betriebs ein sich setzendes Gebäude zu detektieren.

Zeigt ein derartiger Vergleich der ermittelten Abstände der Referenzmarkierungen untereinander bzw. von deren Positionen Abweichungen von den bislang erwarteten Abständen bzw. Positionen der Referenzmarkierungen, so kann eine Korrektur der dekodierten Position einer Codemarkierung in Abhängigkeit vom Vergleich zu verschiedenen Zeitpunkten einer Referenzmarkierung zugeordneten Position erfolgen. Die Positionsinformationen entlang des Codes werden unmittelbar durch Auslesen dieser Codemarkierungen festgestellt.

Dementsprechend umfasst eine erfindungsgemäße Codierungsvorrichtung, die zur Bestimmung der Position einer Aufzugskabine im Aufzugsschacht dient, ein Codeband und eine Markierungsvorrichtung. Das Codeband weist optische Markierungen auf, die aus mindestens zwei Codefarben bestehen, insbesondere unterschiedlichen Grauwerten bzw. besonders bevorzugt aus Schwarz-Weiß-Feldern. Eine Markierung einer einzelnen Position erfolgt anhand eines Positionsmusters, wobei auch eine beliebige Anzahl an Codemarkierungen im Grunde zur Kennzeichnung einer bestimmten Stelle herangezogen werden können.

Die Markierungsvorrichtung ist am Aufzugsschacht angebracht und dient zunächst dazu, einen festen Punkt im Aufzugschacht zu kennzeichnen. Je nach Ausführungsform kann sie gegebenenfalls auch noch weitere Funktionen, wie zum Beispiel die Lagerung des Codebandes erfüllen. Ihre Funktion als Markierung nimmt sie dadurch wahr, dass sie eine Referenzmarkierung aufweist und so angebracht ist, dass sie von einer Detektionsvorrichtung, die das Codeband ausliest, ebenfalls erfasst werden kann. Beispielsweise überdeckt die Markierungsvorrichtung einen Bereich der Codemarkierungen mindestens teilweise, insbesondere vollständig quer zum Verlauf des Codebandes. Als besonders vorteilhaft erweist es sich, dass die Markierungsvorrichtung eine Farbe aufweist, die einer Codefarbe entspricht, damit die Markierungsvorrichtung vom gleichen Sensor, der auch das Codeband detektiert und ausliest, in einfacher Weise erkannt werden kann. Um zweifelsfrei die Markierungsvorrichtungen als solche erkennen zu können, können diese beispielsweise nur eine Farbe aufweisen, insbesondere eine dunkle Codefarbe wie zum Beispiel Schwarz.

Gelegentlich kann es in Aufzugsschächten vorkommen, dass Codebänder verschmutzt oder gegebenenfalls sogar beschädigt werden. Dies hat in der Regel zur Folge, dass ein Teil des Codebandes entweder keine erkennbaren Markierungen in diesem Bereich aufweist, oder dass der Sensor durch die Verschmutzung die Markierung fehlinterpretieren muss, weil beispielsweise helle Bereiche von dunklen Verschmutzungen überlagert sind. Um die Markierungsvorrichtungen daher möglichst zweifelsfrei erkennen zu können, ist es vorteilhaft, für diese einen relativ einfachen Code vorzusehen, der in der Regel möglichst zweifelsfrei erkennbar ist.

Grundsätzlich ist es denkbar, einen Barcode, bzw. einen 2D-Code durch schwarz-weiße Flächen auszubilden. Denkbar ist aber auch, eine absorbierende Fläche (zum Beispiel schwarz) vorzusehen und eine, die aus einem Spiegelmaterial ausgebildet ist und somit vollständig das Licht zurückwirft. Um eine eindeutige Unterscheidung möglich zu machen, gerade dann, wenn das Codeband aus einem Metall besteht und ohnehin vergleichsweise stark reflektiert, kann es vorteilhaft sein, dass der Detektionsstrahl nicht vollständig senkrecht auf die Oberfläche des Codebandes trifft und somit lediglich unmittelbar zurückreflektiert wird. Ohnehin sind beim Sensor in der Regel die Lichtquelle und der Lichtempfänger zumindest geringfügig gegeneinander versetzt, sodass eine Rückreflexion innerhalb des einfallenden Strahls die Detektion eher schwieriger macht. Denkbar ist es auch, das Codeband dachförmig auszubilden, um eine direkte Rückreflektion vermeiden zu können.

Dementsprechend umfasst eine erfindungsgemäße Positionsbestimmungsvorrichtung die erfindungsgemäße Codierungsvorrichtung sowie zusätzlich eine Detektionsvorrichtung zum optischen Auslesen der Codemarkierungen und einen Rechner zur Durchführung des computerimplementierten Verfahrens gemäß der Erfindung. Dadurch können die entsprechenden, bereits genannten Vorteile ebenfalls erzielt werden. Die Detektionsvorrichtung ist entsprechend dazu ausgebildet, ein Pixelbild aufzunehmen, das zumindest die Größe des vorgegebenen Positionsmusters sowie einen ausreichenden Teils der Referenzmarkierung aufzunehmen.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1: das Auslesen der Codierungsvorrichtung gem. der Erfindung durch einen optischen Detektor,
- Figur 2: eine schematische Darstellung einer Kameraaufnahme,
- Figur 3: ein Pixelstreifenpaar,
- Figur 4: ein erweitertes Bildmuster,
- Figur 5: ein Bildmuster,
- Figur 6: ein Positionsmuster,
- Figur 7: ein Gesamtschema des Computer-implementierten Verfahrens gem. der Erfindung,
- Figur 8: eine schematische Darstellung der Bildaufbereitung,
- Figur 9: eine schematische Darstellung des Analyseverfahren,
- Figur 10: eine schematische Darstellung des Vergleichsverfahrens, sowie
- Figur 11: eine schematische Darstellung des Korrelationsverfahrens.

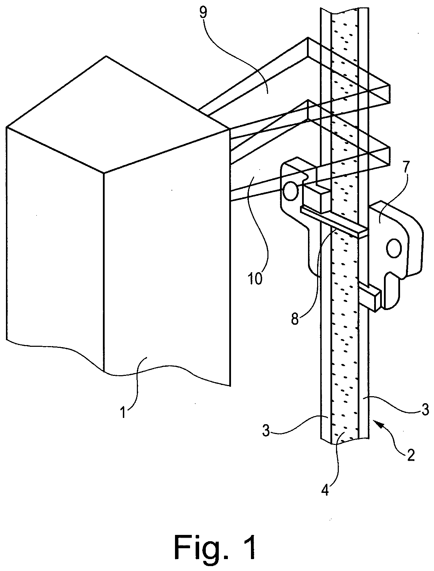

Figur 1 zeigt eine Detektionsvorrichtung 1, die ein Codeband 2 in einem Aufzugschacht ausliest. An den seitlichen Rändern des Codebands sind dazu Positionsstreifen 3 angebracht, die den 2-D-Code 4 seitlich begrenzen. Die Codierungsvorrichtung umfasst das Codeband 2 und eine Clip 7: Das Codeband 2 wird mit derartigen Clips 7 als Lagerungsvorrichtung beweglich gelagert, sodass es in Längsrichtung verschoben werden kann, wenn zum Beispiel das Gebäude sich mit der Zeit setzt. Der Clip 7 umfasst einen Steg 8, der den Code 4 bzw. die Positionsstreifen 3 übergreift. Die Detektionsvorrichtung 1 umfasst im Grunde zwei Kameras, deren Detektionsstrahlen 9, 10 zur Aufnahme eines Detektionsbildes ebenfalls in Figur 1 dargestellt sind.

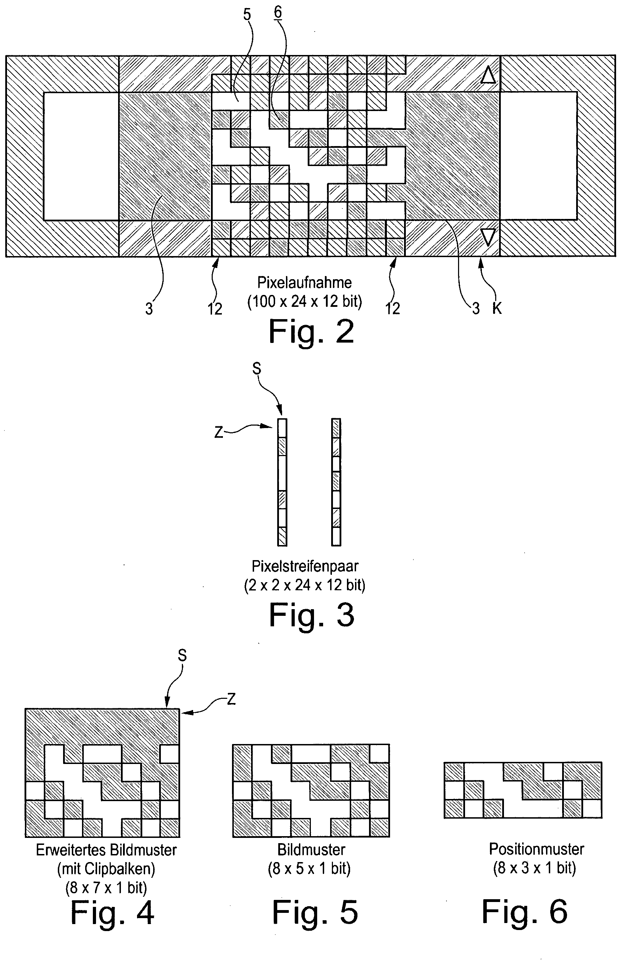

Figur 2 zeigt den aufgenommenen Bildausschnitt 1 der Kamera, der vom Codeband 2 aufgenommen wurde. Die Aufnahme 1 geht über den seitlichen Rand des Codebands 2 hinaus. An den äußeren Rändern des Codebands sind in Längsrichtung des Codebands 3 Positionsstreifen 3 angebracht. Diese sind vollständig schwarz ausgebildet und werden somit von der Detektionsvorrichtung und dem Auswerteverfahren einfach erkannt. Ebenso sorgen diese Positionsstreifen 3 für eine Rasterung, sodass beim Auswerteverfahren erkennbar ist, in welchem Bereich der 2D-Code 4 zu finden ist. Der 2D-Code setzt sich zusammen aus einer Matrix 4, die einzelne Matrixelemente 5, 6 aufweist. Das Matrixelement 5 ist ein helles, das Matrixelement 6 ein dunkles. Die Matrixelemente 5, 6 entsprechen jedoch im Allgemeinen nicht jeweils einem einzelnen Pixel der Kameraaufnahme. Daher ist es bei der Bildverarbeitung notwendig, aufgenommene Pixel gemäß ihrer Lage und ihrer Helligkeit einander zuzuordnen und zu einem Matrixelement zusammenzufassen. Im zusammengefassten Bild wiederum repräsentiert dann ein Pixel ein Matrixelement. In den Figuren 3 bis 6 werden durch Bildaufbereitung B aufbereitete Ausschnitte angegeben, bei denen Kamerapixel zu Matrixelementen aufbereitet wurden.

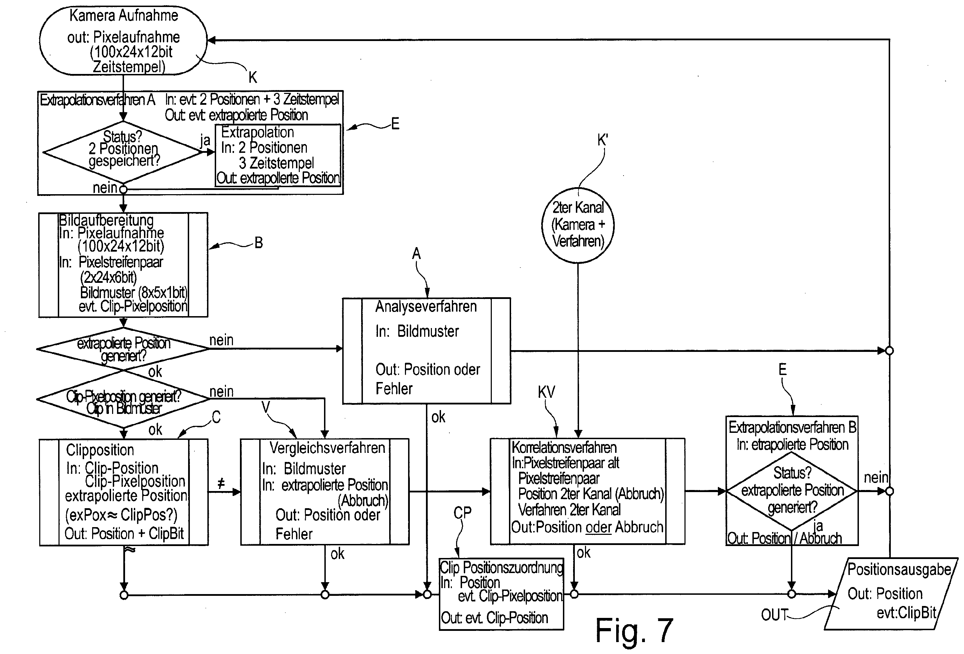

Eine Gesamtdarstellung eines Computer-implementierten Verfahrens zur Positionsbestimmung ist in Figur 7 dargestellt:

### Kameraaufnahme K

Die Detektionsvorrichtung 1 ermöglicht eine optische Detektion der am Codeband 2 angebrachten Markierungen 3, 4. Die Kamera (ggf. auch mehrere Kameras) arbeitet in der Regel im Infrarotbereich (IR-Licht, Wellenlänge ca. größer als 780 Nanometer bis 1 Millimeter), wodurch insbesondere auch störende Einflüsse vermieden werden können. Fährt die Kabine im Aufzugsschacht, in dem auch das Codeband 2 aufgehängt ist, so wird sie entlang des Codebands verfahren, wobei die Kamera so ausgerichtet ist, dass sie das Codeband entsprechend erfassen kann. Während der Fahrt macht die Kamera wiederholt immer wieder Aufnahmen K von Abschnitten des Codebands (insbesondere in gleichen Zeitabständen), vgl. Figur 2. Typischerweise kann eine derartige Pixelaufnahme 100 x 24 Pixel umfassen und als Graustufenbild (z.B. 12-Bit-Bild) aufgenommen werden. Gleichzeitig ist im vorliegenden Fall eine Uhr oder ein Timer vorgesehen, der je nach Kameraaufnahme einen Zeitstempel zuordnet, das heißt eine zeitliche Information, wann die Aufnahme erfolgt ist. Dieser Zeitstempel ermöglicht später eine Auswertung der Bilder, wenn weitere Informationen bekannt, das heißt zum Beispiel einzelne Positionen zu bestimmten Zeitpunkten, Geschwindigkeit der Aufzugkabine oder Beschleunigung der Aufzugkabine.

### Extrapolationsverfahren E

Ziel des Gesamtverfahrens aus Fig. 7 ist die Positionsbestimmung der Aufzugkabine, und zwar zu verschiedenen Zeitpunkten, wobei den einzelnen Positionen, wie bereits beschrieben, Zeitstempel mitgegeben werden können. In einem weiteren Verfahrensschritt wird nach der Kameraaufnahme K überprüft, ob in einem Speicher bereits zwei Positionen bestimmt wurden, zu denen auch zwei Zeitstempel vorliegen. Ist dies der Fall, kann zu einem weiteren, dritten Zeitpunkt die Position bestimmt werden (Extrapolation). Falls die Kabine keine gleichförmige Bewegung durchgeführt hat, kann die Extrapolation gegebenenfalls unter Berücksichtigung der aus der Kabinensteuerung bzw. -regelung bekannten Geschwindigkeit der Aufzugkabine bzw. Beschleunigung der Aufzugkabine erfolgen. Aus zwei Positionen und deren Zeitstempel, das heißt der zeitlichen Information, wann diese Positionen erreicht wurden, kann bei gleichförmiger Bewegung der Aufzugkabine deren Geschwindigkeit bestimmt werden. Ändert sich diese Geschwindigkeit nicht, so kann zu einem weiteren dritten Zeitpunkt entsprechend daraus die Position gewonnen werden. Beschleunigt die Aufzugkabine in dieser Zeit oder wird die Aufzugkabine in dieser Zeit abgebremst, so muss dies entsprechend berücksichtigt werden. Diese Angaben über die Beschleunigung und gegebenenfalls auch über die Geschwindigkeit können bei Ausführungsformen der Erfindung von der Kontrollvorrichtung der Fahrkabine (Steuerung oder Regelung) abgerufen bzw. ausgelesen werden. Sind nach Durchführung der Kameraaufnahme weniger als zwei Positionen gespeichert, wird zum nächsten Verfahrensschritt übergegangen, ohne dass eine Extrapolation stattfindet.

Die Voraussetzung, um das Extrapolationsverfahren E durchzuführen, ist es, dass wenigstens zwei Positionen und drei Zeitstempel gespeichert sind. Die beiden Positionen dienen dazu, eine Streckendifferenz zwischen den beiden Positionen bestimmen zu können. Sind zwei weitere Zeitstempel vorhanden, von denen jeweils einer einer der beiden Positionen zugeordnet ist, so kann auch die Zeitdifferenz, die nötig war, ausgehend von einer der beiden Positionen die andere zu erreichen, bestimmt werden. Der dritte Zeitstempel ist notwendig, um schließlich die weitere, zu extrapolierende Position bestimmen zu können. Vor der eigentlichen Durchführung des Extrapolationsverfahrens muss also geprüft werden, ob diese Voraussetzung erfüllt ist, dass insgesamt zwei Positionen gespeichert sind sowie drei Zeitstempel.

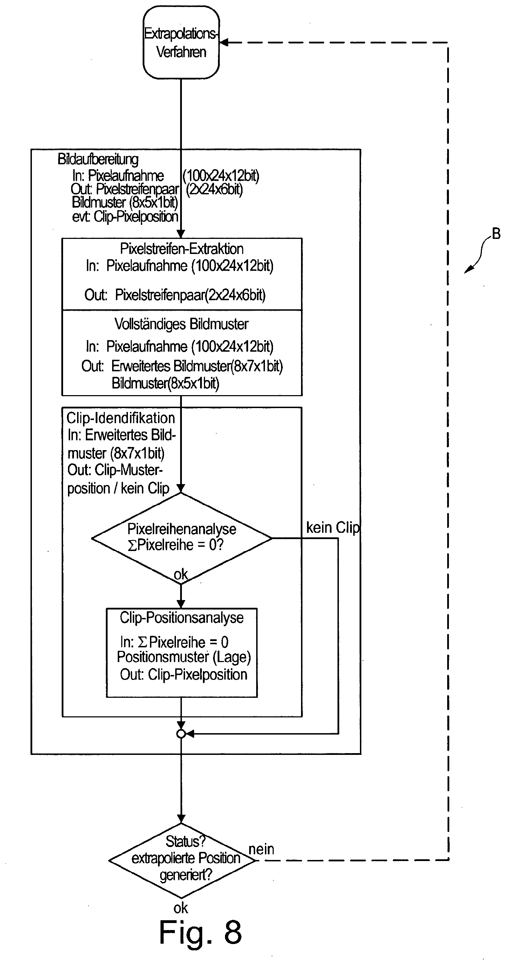

### Bildaufbereitung B (Fig. 8)

Der nächste Verfahrensschritt besteht aus einer Bildaufbereitung. Bei der Kameraaufnahme wurde ein Graustufenbild aufgenommen. Grundsätzlich ist es auch denkbar, sofort ein Schwarz-Weiß-Bild aufzunehmen, zumal der auf dem Codeband 2 aufgedruckte Code 4 als Barcode oder 2D-Code ausgebildet ist und somit grundsätzlich nur aus zwei Farben bzw. Helligkeiten besteht. Es muss allerdings berücksichtigt werden, dass durch Lichteinflüsse aus der Umgebung, Ablagerungen auf dem Codeband, geringe Unterschiede im Abstand oder in Detektionswinkel nicht immer exakt die gleichen Helligkeitswerte einer Oberfläche detektiert werden können. Schwarze Flächen erscheinen sodann gegebenenfalls mehr oder weniger grau. Um diesen Effekt Rechnung tragen zu können, ist es vorteilhaft, ein Grauwertebild aufzunehmen und anhand der Farbe, hier anhand eines Schwellwertes einer Graustufe bzw. Helligkeit zu entscheiden, ob die detektierte Fläche oder das detektierte Pixel in Bezug auf einen Barcode oder einen 2D-Code einem dunklen oder einem hellen Bereich zuzuordnen ist. Gegebenenfalls kann dieser Schwellwert auch variabel gesetzt werden, sodass eine Nachjustierung ebenfalls grundsätzlich ermöglicht wird. Zum einen können somit die aufgenommenen Bilder grundsätzlich in ein 1-Bit-Bild umgewandelt werden. Zudem ist zu beachten, dass bei der Bildaufbereitung auch eine Art Bilderkennung oder Zuordnung zu einem Raster erfolgt.

Auf diese Weise können (im vorliegenden Fall) zwei 2 x 24 Pixel umfassende Pixelstreifen, deren Längserstreckung entlang der Spalten S verläuft, separiert werden (vgl. Fig. 3).

Des Weiteren werden ein Bildmuster und ein erweitertes Bildmuster erzeugt (Fig. 4 und 5). Das erweiterte Bildmuster ist in Figur 4 dargestellt und besteht aus 8 x 7 Matrixelementen in Schwarz-Weiß, das heißt 1-Bit-Darstellung. Bei diesen generierten Mustern werden die Matrixelemente zusammengefasst und in ihrer Größe reduziert jeweils als ein Pixel dargestellt. Das erweiterte Bildmuster gemäß Figur 4 besitzt deshalb mehr Zeilen Z als das Bildmuster gemäß Figur 5, weil, wie später erläutert wird, der Steg 8 einer Lagerungsvorrichtung 7 bzw. eines Clips drei Zeilen umfassen kann. Zudem umfasst jeder Positionsmarker, der die vollständige Information über eine einzelne Position besitzt, im vorliegenden Ausführungsbeispiel drei Zeilen. Für einzelne Auswerteverfahren können gegebenenfalls zusätzliche Zeilen benötigt werden.

Das einfache Bildmuster ist in Figur 5 dargestellt und besitzt lediglich fünf Zeilen, ebenfalls dargestellt in Schwarzweiß, also Einbitdarstellung. Das gesamte 2D-Matrixmuster umfasst zehn Spalten. Die äußere rechte und die äußere linke Spalte 11 dienen dazu, Positionsmarker, also zusammenhängende Bereiche der Matrix, die eine separate Position vollständig codieren, abzutrennen, das heißt zu markieren, wo diese anfängt und aufhört. Dies ist notwendig, damit bei zufälligem Aufnehmen eines Bildes klar ist, wo die Position markiert ist und nicht Teile zweier verschiedener Positionsmarker zusammen ausgewertet werden, was eine falsche Positionsangabe liefern könnte. Bei dem vorliegenden Ausführungsbeispiel sind die Zeilen der Matrix ohne Abstand zueinander angeordnet, was eine höhere Dichte der Markierungen ermöglicht.

Figur 6 zeigt ein Positionsmuster mit lediglich drei Zeilen, also ein Positionsmarker mit der vollständigen Codierung einer bestimmten Position.

Das Codeband ist, wie bereits oben beschrieben, in Lagerungsvorrichtungen zur beweglichen Lagerung des Codebandes, die an der Wand des Aufzugsschachts befestigt sind, beweglich gelagert. Diese so genannten Clips 7 umgreifen das Codeband 2 zur Aufzugkabine hin (mit dem Steg 8), also zur der Seite, an der sich die Markierung des Codebands befindet. Grundsätzlich verdeckt somit der Clip das Codeband teilweise. An dieser Stelle wäre also grundsätzlich bei einer Kameraaufnahme die Position nicht "erfassbar" sein. Daher ist es vorteilhaft, den Clip als solches zu erkennen. Besonders vorteilhaft ist die erfindungsgemäße Codierungsvorrichtung dahingehend, dass der Clip jedoch nicht als Bild erkannt werden muss, sondern dass er überraschenderweise zusammen mit dem Codeband ausgewertet werden kann. Dazu besitzt der Steg 8 des Clips, der über das Codeband ragt und detektiert wird, ein Codierungsmuster, das dem des Codebands entspricht, also ein Barcode oder ein 2D-Code.

Besonders vorteilhaft ist es, den auf dem Clip abgebildeten Code möglichst einfach zu gestalten, insbesondere in einer Farbe der Barcode- bzw. 2D-Code-Codierung, also schwarz oder weiß bzw. hell oder dunkel. Zum einen wird dadurch die Herstellung des Clips vereinfacht. Zum anderen kann der Clip dadurch einfach erkannt werden, was insbesondere vorteilhaft ist, weil das bauphysikalische Phänomen des Sich-Setzens von Gebäuden es mit sich bringen kann, dass sich der Clip relativ zum Codeband bewegt, wenn sich das Gebäude mit der Zeit setzt.

Der Clip ändert sodann beim Sich-Setzen des Gebäudes seine relative Position zum Codeband. Daher ist es vorteilhaft, nur eine der Markierungen, nämlich entweder das Codeband oder den Clip mit einer absoluten Positionsangabe zu versehen, damit entsprechend ein Vergleich durchgeführt werden kann. Der Clip kann somit durch eine mathematische Analyse bzw. Durchführung eines Algorithmus gefunden werden. Diese Clipidentifikation erfolgt in der Bildaufbereitung über das erweiterte Bildmuster. Es erfolgt eine Pixelreinanalyse, in dem die Quersumme über die detektierten Matrixelemente gebildet wird. Beim vorliegenden Fall ist der Clip schwarz ausgebildet, wird also geprüft, ob die Quersumme über die Matrixelemente null ergibt. Ist dies der Fall, kann es sich nur um einen Clip handeln, da die Codierung so gewählt ist, dass andere Reihen nicht die Quersumme 0 besitzen können.

Da auch bekannt ist, wie viele Zeilen der Clip in Anspruch nimmt, zum Beispiel drei Zeilen, kann auch dessen Position bestimmt werden. Ist zum Beispiel am oberen Bildrand nur eine Zeile komplett schwarz, so wird sich der Clip entsprechend im oberen Bereich der Kameraaufnahme befinden. Sind alle Zeilen des Clips erkennbar, so befindet er sich an entsprechender Stelle in der Kameraaufnahme K. Durch einen vollständig abgebildeten Positionsmarker kann somit eine unmittelbar benachbarte Position zugeordnet werden. Ist bei einer Ausführungsform nicht mehr genügend Platz, um einen kompletten Positionsmarker zu erkennen, so muss gegebenenfalls über Extrapolation auf die Position des Clips geschlossen werden oder dieser einen entsprechenden Position zugeordnet werden. Es muss bei Detektion eines Clips nicht immer seine exakte Position zugeordnet werden; es genügt, den Clips immer in gleicher Weise eine Position zuzuordnen, beispielsweise mit einem konstanten Versatz, da in der Regel nur relative Abstände zwischen den Clips festgestellt werden müssen, um zum Beispiel festzustellen, wie stark ein Gebäude sich gesetzt hat. Im vorliegenden Fall wird beispielsweise die Unterkante des Clips hinsichtlich ihrer Position bestimmt.

### Clip-Position C:

In einem weiteren Verfahrensschritt wird festgestellt, ob überhaupt bereits eine extrapolierte Position generiert wurde. Ist dies der Fall, wird des Weiteren entschieden, ob ein Clip identifiziert werden konnte und eine Clip-Pixelposition erhalten worden ist. Ist dies ebenfalls zu bejahen, erfolgt als nächstes Teilverfahren die Bestimmung C der Clipposition (Figur 7). Mit Hilfe der bisherigen Information über die Clipposition wird mit Hilfe des Extrapolationsverfahrens E eine Position des Clips extrapoliert. Stimmt diese extrapolierte Position zumindest ungefähr mit der Clipposition überein, wird als Position die extrapolierte Position ausgegeben sowie gegebenenfalls zusätzlich eine Information, ob ein Clip vorhanden war oder nicht. Diese Information kann als 1-Bit-Information (Clipbit) ausgebildet sein. Schließlich wird dem Clip seine entsprechende Position zugeordnet (Verfahrensschritt CP) und ausgegeben. Die Clipposition selbst kann ebenfalls gespeichert werden und später für eine Korrektur benutzt werden, wenn sich das Gebäude gesetzt hat.

Ist der Aufzug beispielsweise gerade erst angefahren und wurden aus diesem Grund noch keine zwei Positionen gespeichert, so wird zunächst das so genannte Analyseverfahren A durchgeführt.

Wenn aus dem detektierten Positionsmuster eine Position gewonnen werden kann und teilweise zumindest ein Clipbalken detektiert wird, muss die exakte Position des Clipbalkens extrapoliert werden. Die Position des Clipbalkens ist dann in der Regel leicht gegenüber der detektierten Position verschoben. Wenn der Clipbalken das Positionsmuster vollständig überdeckt, kann gegebenenfalls aus den in der Vergangenheit gespeicherten Positionen die neue Position extrapoliert werden. Wenn beispielsweise der Clipbalken das Positionsmuster vollständig ausfüllt, kann beim vorliegenden Ausführungsbeispiel aus dem Clipbalken allein nicht auf dessen Position geschlossen werden, sodass diese aus den zuvor gespeicherten Daten zu extrapolieren ist.

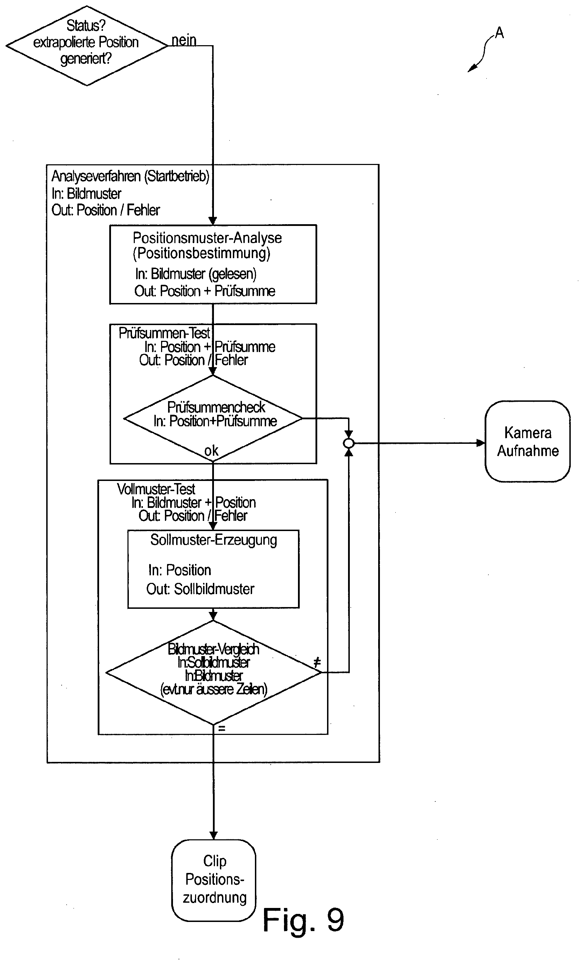

### Analyseverfahren A (Fig. 9)

Beim Analyseverfahren wird zunächst anhand des von der Kamera bestimmten Bildmusters ein Prüfsummentest vorgenommen, das heißt, es wird überprüft, ob die erfassten Matrixelemente eine spezielle Prüfsumme ergeben. Zudem wird anhand der Seitenränder 11 der Positionsmarker (Figur 6) bestimmt und mit Hilfe des vorgegebenen Algorithmus die Position des aufgenommenen Bildes bestimmt. Die errechnete Position dient im vorliegenden Fall dazu, anhand des Umkehrverfahrens des Algorithmus darauf zu schließen, welche weiteren Zeilen an den Positionsmarker angrenzen. Diese wurden ebenfalls mit von der Kamera aufgenommen. Sodann wird ein Vergleich vorgenommen, ob diese berechneten Muster auch mit dem der an die Positionsmarker angrenzenden Bereiche übereinstimmen. Diese Bereiche, die an den Positionsmarker angrenzen, müssen somit nicht extra zur Berechnung einer Position herangezogen werden. Je nachdem, wie viel von den oberen und unteren Randbereichen innerhalb der Kameraaufnahme K angezeigt wird, ist dies gegebenenfalls ohne Weiteres gar nicht möglich. Entsprechen diese generierten Codierungen den tatsächlich aufgenommenen Codierungen, so kann mit sehr hoher Wahrscheinlichkeit darauf geschlossen werden, dass die Positionsangabe tatsächlich zutrifft. Diese Position kann dann ausgegeben werden (Positionsausgabe OUT in Fig. 7), wobei gegebenenfalls auch eine zusätzliche Zuordnung der Clipposition erfolgen kann, wenn ein Clip detektiert wurde. Wurde eine extrapolierte Position generiert, aber kein Clip aufgenommen, so wird das Vergleichsverfahren durchgeführt.

Wie bereits erläutert, beinhaltet das Positionsmuster, welches gemäß Figur 6 drei Zeilen aufweist, die gesamte Positionsinformation. Das Analyseverfahren benutzt jedoch das Bildmuster, das zwei Zeilen mehr umfasst als das Positionsmuster. Aus dem Positionsmuster, auf das ein Umkehrverfahren des Algorithmus zur Positionsbestimmung angewendet werden kann, kann somit auf die beiden angrenzenden Zeilen geschlossen werden. Es wird also ein entsprechendes Soll-Bild-Muster erzeugt und mit dem tatsächlichen Bildmuster (vgl. Figur 5) verglichen. Bei einer Übereinstimmung handelt es sich bei der ermittelten Position mit hoher Wahrscheinlichkeit um die tatsächliche Position der Aufzugskabine. Wie in Figur 4 zu sehen, umfasst ein Clipbalken eine Breite von drei Zeilen, was der Größe nach einem Positionsmuster entspricht. Wenn der Clipbalken in einem Bildmuster erscheint, kann es also beispielsweise vorkommen, dass dieser abzüglich der oberen und unteren Zeile genau das herausgefilterte Positionsmuster bildet. Der Clip kann entsprechend als solcher detektiert werden, indem die Quersumme über die Grauwerte im Pixelbild gebildet und mit einem Grauwerte-Schwellenwert verglichen wird.

Beim Ausführungsbeispiel ist der Clipbalken schwarz. Da der Farbe Schwarz der Wert Null zugeordnet ist, ergibt dies im Idealfall die Quersumme null, weil lediglich schwarze Pixel detektiert wurden. In der Realität kann es jedoch vorkommen, dass statt einem idealen Schwarzwert ein dunkler Grauwert beispielsweise detektiert wird, sodass es in der Regel vorteilhaft ist, den Schwellwert nicht auf null, sondern auf einen bestimmten Schwellenwert in Abhängigkeit von den bei Detektion zu erwartenden Grauwerten abgestimmt wird. Ist der Clip nur teilweise im Positionsmuster, das aus dem Bildmuster, das aus dem Bildmuster gewonnen wird, enthalten, so ist dennoch aus den erkannten Zeilen und unter Berücksichtigung der Clip-Position ein Rückschluss auf die tatsächliche Position möglich. Bei dem vorliegenden Ausführungsbeispiel ist der Code so gewählt, dass jede Zeile tatsächlich völlig individuell ist und kein zweites Mal auf dem Codeband vorkommt. Wenn ein Clipbalken detektiert wird und nur ein Teil des Positionsmusters ausmacht, muss im vorliegenden Beispiel automatisch die oberste oder unterste Zeile des Bildmusters ebenfalls einen Teil des Clipbalkens bilden. Auch dies kann beim Vollmustertest des Analyseverfahrens berücksichtigt werden.

Das hohe Maß an Sicherheit ist gewährleistet, weil nicht nur die Detektion, die grundsätzlich fehlerbehaftet sein kann (sei es durch Verschmutzungen, zusätzliche Reflexion oder sonstige Fehldetektierungen) berücksichtigt wird, sondern weil auch anhand der Umkehrung des Algorithmus auf einen bislang noch nicht berücksichtigten Teil der Detektion zurückgegriffen und auf diesen rückgeschlossen wird.

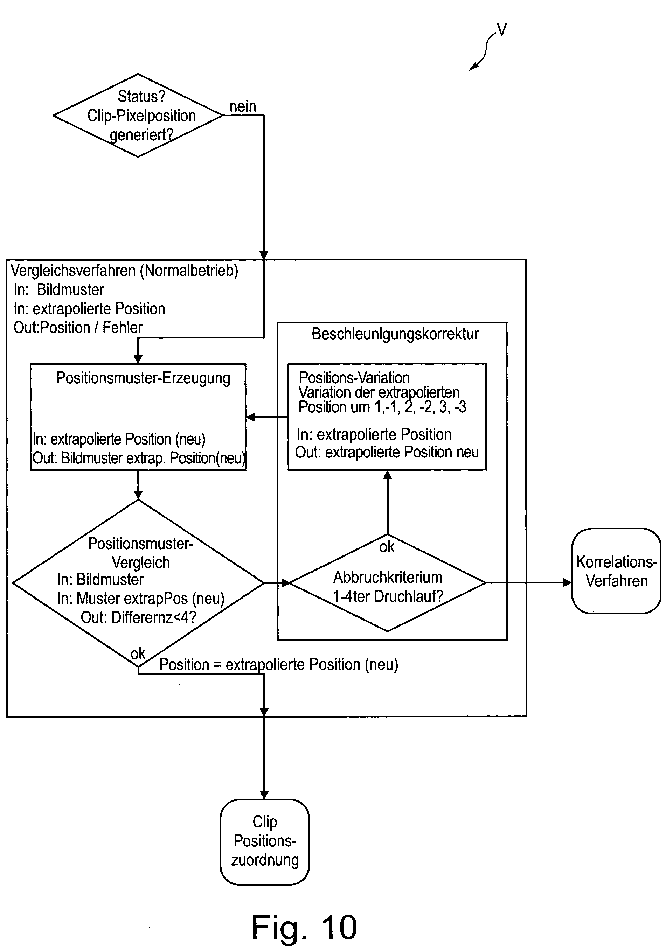

### Vergleichsverfahren V (Fig. 10)

Neben dem Bildmuster wird für das Vergleichsverfahren die extrapolierte Position benötigt (Fig. 7). Aus der extrapolierten Position allein wird das zu erwartende Bildmuster bestimmt und mit dem tatsächlich aufgenommenen verglichen. Stimmt der Vergleich exakt, so kann davon ausgegangen werden, dass tatsächlich die korrekte Position gefunden wurde, und die extrapolierte Position wird als Positionsangabe OUT ausgegeben. Es kann jedoch vorkommen, dass, obgleich die extrapolierte Position und die tatsächliche Position übereinstimmen, dennoch das aufgenommene Bild nicht richtig aufbereitet werden kann, weil zum Beispiel das Codeband an einzelnen Stellen verschmutzt ist oder weil andere störende Einflüsse eine Rolle gespielt haben. Ist der Code so gewählt, dass nicht von einer Zeile auf die nächste lediglich ein oder nur wenige Matrixelemente sich ändern, so kann eine geringe Abweichung bei wenigen Matrixelementen toleriert werden und dennoch davon ausgegangen werden, dass die extrapolierte Position tatsächlich vorliegt und der Aufgenommenen entspricht. Im vorliegenden Fall kann dies beispielsweise dann noch angenommen werden, wenn weniger als vier Matrixelemente abweichen. Dazu ist es besonders vorteilhaft, aus Sicherheitsgründen die Codierung so zu wählen, dass von einer Zeile Z auf die nächste diese stark abweichen kann. Beispielsweise kann der Algorithmus eine Verschlüsselung vorsehen, bei in Abhängigkeit von der Position der Zeile die Matrixelemente in vorgegebener Weise vertauscht werden, was einfach nachvollzogen werden kann, wenn der Algorithmus bekannt. Ist die Abweichung jedoch zu groß, so kann ein Verfahren mit einer Beschleunigungskorrektur durchgeführt werden. Insbesondere dann, wenn die Aufzugkabine während ihrer Fahrt beschleunigt bzw. abgebremst wird, treten hinsichtlich der Extrapolation Unsicherheiten auf, da diese Geschwindigkeitsänderungen im Zeitverlauf genau erfasst werden müssten und die Geschwindigkeit über Integration der Beschleunigung über die Zeit zu erfassen wäre. Dies kann in der Regel aus technischen Gründen nicht so genau vorgenommen werden, dass keine Abweichungen denkbar wären, zumal die Markierungen in einem Abstand von einem halben Millimeter beispielsweise angebracht sind.

Gegebenenfalls wird eine Beschleunigungskorrektur mit einer Art Positionsvariation durchgeführt, wozu zunächst ebenfalls die extrapolierte Positionsangabe benötigt wird. Auf der extrapolierten Positionsängabe, die berechnet worden ist, wird nun das Bildmuster erzeugt und die weiteren Zeilen, die unmittelbar an den Positionsmarker des erzeugten Bildmusters angrenzen. Das aufgenommene Muster wird somit mit Bildmustern verglichen, die ein, zwei oder drei Zeilen oberhalb des Bildmusters zu finden sind, da es der extrapolierten Positionsangabe entspricht. Existiert das aufgenommene Bildmuster in diesem Bereich, so kann davon ausgegangen werden, dass die Positionsbestimmung innerhalb einer tolerierbaren Grenze abgewichen ist und die extrapolierte Position ist die ausgegebene Position. Wenn auch dieser Vergleich zu keinem Ergebnis führt, wird ein Korrelationsverfahren durchgeführt. Dazu wird das aus Figur 3 bekannte Pixelstreifenpaar eingesetzt.

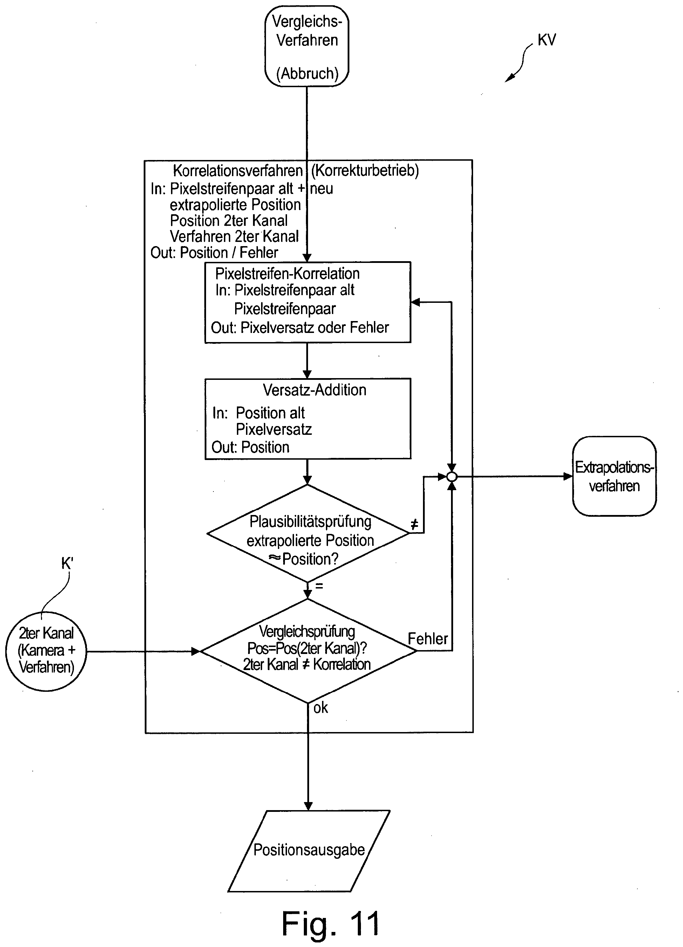

### Korrelationsverfahren KV (Fig. 11)

Benötigt wird zunächst das erzeugte Pixelstreifenpaar (siehe Fig. 3), und zwar jeweils ein aktuelles und ein zuvor während der Fahrt aufgenommenes Muster. Diese Pixelstreifen, die zu verschiedenen Zeiten aufgenommen wurden, werden gewissermaßen übereinander gelegt und verschoben, bis eine Übereinstimmung zustande kommt. Dabei wird entsprechend der Versatz bestimmt. Anhand der extrapolierten Position kann zusätzlich eine Plausibilitätsprüfung durchgeführt werden. Da die Detektionsvorrichtung insgesamt zwei Kameras umfasst, kann beim Korrelationsverfahren KV noch ein zweiter Vergleich mit einer zweiten Kamera (zweites Kamerabild K' in Figur 7) durchgeführt werden und auf Stimmigkeit hin untersucht werden. Wenn auch dieses Korrelationsverfahren KV zu keinem einheitlichen Ergebnis führt, kann ein weiteres Extrapolationsverfahren E noch einmal durchgeführt werden, das analog zum oben Beschriebenen verläuft. Wenn auch dies zu keinem Ergebnis führt, muss eine neue Kameraaufnahme durchgeführt werden, da keine Position bestimmt werden kann. Gegebenenfalls wird dann, wenn gar keine Position bestimmt werden kann, ein Notfall ausgegeben.

Grundsätzlich ist es auch denkbar, insbesondere das Analyseverfahren, das Vergleichsverfahren oder das Korrelationsverfahren in anderer Weise miteinander, z.B. in anderer Reihenfolge, zu kombinieren.

### Bezugszeichenliste:

- 1: Detektionsvorrichtung
- 2: Codeband
- 3: Positionsstreifen
- 4: 2D-Code
- 5: Matrixelement
- 6: Matrixelement
- 7: Clip
- 8: Steg
- 9: Detektionsausleuchtung
- 10: Detektionsausleuchtung
- 11: Markierungsspalten
- A: Analyseverfahren
- B: Bildaufbereitung
- C: Bestimmung der Clippositon
- CP: Clip-Positionszuordnung
- E: Extrapolationsverfahren
- K: Kameraaufnahme
- K': zweite Kameraaufnahme
- KV: Korrelationsverfahren
- V: Vergleichsverfahren
- OUT: Positionsausgabe
- S: Spalte
- Z: Zeile

## Patentansprüche

1. Computer-implementiertes Verfahren
- zur Bestimmung der Position einer Aufzugkabine in einem Aufzugschacht
- mit Bildaufbereitung
- durch optische Aufnahme
- eines Abschnitt des Codebands und
- mindestens eines Abschnitts einer Markierungsvorrichtung, die am Aufzugschacht angebracht ist,
- zu einem aus Pixeln bestehenden Pixelbild (K)
- und mit Positionsmusteranalyse
- durch Identifikation der Codemarkierungen (5,6) aus dem Pixelbild,
- durch Identifikation eines Positionsmusters aus den Codemarkierungen,
- durch Umwandlung des Positionsmuster zu Binärcode und
- Dekodieren des Binärkode zu einer Position
- und mit Referenzmarkierungsanalyse
- durch Auslesen mindestens einer Zeile des Pixelbildes oder Codemarkierungen im Bereich für zu erwartende Codemarkierungen,
- durch Umwandlung der ausgelesenen Pixel oder Gruppen von benachbarten Pixeln jeweils zu Zahlencodes, insbesondere zu Graustufenwerten,
- durch Vergleich der Zahlencodes oder von Summen der Zahlencodes mit einem Schwellwert und
- durch Identifizierung einer Referenzmarkierung in Abhängigkeit vom Vergleich.

2. Computer-implementiertes Verfahren nach Anspruch 1
- mit Positionszuweisung
- durch Zuordnung einer Position
für die Referenzmarkierung
- in Abhängigkeit von der Position eines Positionsmusters,
- wobei die Identifizierung der Referenzmarkierung und die Dekodierung der Position aufgrund desselben Pixelbildes erfolgt.

3. Computer-implementiertes Verfahren nach einem der vorhergehenden Ansprüche, **dadurch gekennzeichnet,**
- **dass** das Pixelbild ein Graustufenbild ist.

4. Computer-implementiertes Verfahren nach einem der vorhergehenden Ansprüche, **dadurch gekennzeichnet,**
- **dass** die Identifikation der Codemarkierungen anhand eines Graustufenschwellenwertes durch Umwandlung in ein Schwarz-Weiß-Bild erfolgt.

5. Computer-implementiertes Verfahren nach einem der vorhergehenden Ansprüche, **dadurch gekennzeichnet,**
- **dass** eine Speicherung der Position einer Referenzmarkierung zu verschiedenen Zeitpunkten erfolgt.

6. Computer-implementiertes Verfahren nach einem der vorhergehenden Ansprüche, **dadurch gekennzeichnet,**
- **dass** ein Vergleich der zu verschiedenen Zeitpunkten einer Referenzmarkierung zugeordneten Positionen erfolgt.

7. Computer-implementiertes Verfahren nach einem der vorhergehenden Ansprüche, **dadurch gekennzeichnet,**
- **dass** eine Korrektur der decodierten Position einer Codemarkierungen in Abhängigkeit vom Vergleich der zu verschiedenen Zeitpunkten einer Referenzmarkierung zugeordneten Positionen erfolgt.

8. Codierungsvorrichtung
- zur Bestimmung der Position einer Aufzugkabine im Aufzugschacht, umfassend:
- ein Codeband (2)
- das optische Codemarkierungen aufweist
- aus mindestens zwei Codefarben
- insbesondere mit unterschiedlichen Grauwerte
- insbesondere schwarz-weiß,
- welche Positionsmuster ausbilden
- insbesondere als Barcode und/oder als 2D-Code (4),
- die diskrete Positionen kennzeichnen, sowie
- eine Markierungsvorrichtung (7)
- zur Befestigung am Aufzugsschacht,
- welche eine Referenzmarkierung (7) aufweist,
- die einen Bereich der Codemarkierungen
- mindestens teilweise, insbesondere vollständig,
- quer zum Verlauf des Codebandes überdeckt,
- und die eine Farbe aufweist,
- die einer Codefarbe entspricht,
- insbesondere um diese einer Codefarbe zuzuordnen,
- insbesondere nur eine Farbe aufweist,
- die insbesondere der dunkleren Codefarbe entspricht,
- die insbesondere schwarz ist.

9. Codierungsvorrichtung nach Anspruch 8, **dadurch gekennzeichnet, dass**
- die Referenzmarkierung
- durch eine Oberfläche ausgebildet ist,
- die zur Oberfläche des Codebandes schräg steht, sodass ein senkrecht zum Codeband verlaufender Lichtstrahl von der Oberfläche nicht senkrecht zurückreflektiert wird,
- insbesondere einen Winkel von 20 bis 80 Grad, insbesondere von 45 bis 80 Grad zur Oberfläche des Codebandes aufweist,
- insbesondere dachförmig ausbildet ist.

10. Codierungsvorrichtung nach einem der vorhergehenden Ansprüche 8 bis 9, **dadurch gekennzeichnet, dass**
- die Markierungsvorrichtung
- eine Lagerungsvorrichtung (7)
- zur längs beweglichen Lagerung des Codebandes im Aufzugsschacht umfasst.

11. Codierungsvorrichtung
- nach einem der Ansprüche 8 bis 10
- **dadurch gekennzeichnet, dass** diese zur Durchführung eines Computer-implementierten Verfahrens nach einem der vorhergehenden Ansprüche ausgebildet ist.

12. Computer-implementiertes Verfahren
- nach einem der Ansprüche 1 bis 7
- **dadurch gekennzeichnet, dass** eine Codierungsvorrichtung nach einem der Ansprüche 8 bis 11 verwendet wird.

13. Positionsbestimmungsvorrichtung
- zur Bestimmung der Position einer Aufzugkabine in einem Aufzugschacht, umfassend:
- eine Codierungsvorrichtung nach einem der Ansprüche 8 bis 11,
- eine Detektionsvorrichtung (1)
- zum optischen Auslesen der Codemarkierungen
- sowie einen Rechner
- zur Durchführung eines Computer-implementierten Verfahrens nach einem der Ansprüche 1 bis 7 oder 12.

14. Positionsbestimmungsvorrichtung nach Anspruch 13, **dadurch gekennzeichnet,**
- **dass** die Aufnahmevorrichtung
- zur Aufnahme eines Pixelbilds mit
- mindestens einem Positionsmusters und
- mindestens einen Teil der Referenzmarkierung ausgebildet ist.

## Claims

1. A computer-implemented method
- for determining the position of a lift car in a lift shaft
- including image processing
- by optical capture
- of a portion of the code strip and
- at least one portion of a marking device which is mounted on the lift shaft,
- to yield a pixel image (K) consisting of pixels
- and including position pattern analysis
- by identifying the code markings (5, 6) from the pixel image,
- by identifying a position pattern from the code markings,
- by converting the position pattern into binary code and
- decoding the binary code to yield a position
- and including reference marking analysis
- by reading out at least one line of the pixel image or code markings in the region for anticipated code markings,
- by converting the read-out pixels or groups of adjacent pixels in each case to yield numerical codes, in particular to yield grey scale values,
- by comparing the numerical codes or sums of numerical codes with a threshold value and
- by identifying a reference marking as a function of the comparison.

2. The computer-implemented method according to claim 1
- including position allocation
- by assigning a position for the reference marking
- as a function of the position of a position pattern,
- wherein the reference marking is identified and the position decoded on the basis of the same pixel image.

3. The computer-implemented method according to one of the preceding claims, **characterised in that**
- the pixel image is a grey scale image.

4. The computer-implemented method according to one of the preceding claims, **characterised in that**
- the code markings are identified on the basis of a grey scale threshold value by conversion into a black-and-white image.

5. The computer-implemented method according to one of the preceding claims, **characterised in that**
- the position of a reference marking is saved at different points in time.

6. The computer-implemented method according to one of the preceding claims, **characterised in that**
- the positions assigned to a reference marking at the different points in time are compared.

7. The computer-implemented method according to one of the preceding claims, **characterised in that**
- the decoded position of a code marking is corrected as a function of the comparison of the positions assigned to a reference marking at different points in time.

8. A coding device
- for determining the position of a lift car in the lift shaft, comprising:
- a code strip (2)
- which has optical code markings
- of at least two code colours,
- in particular with different grey values,
- in particular black-and-white,
- which form position patterns,
- in particular as a barcode and/or as a 2D code (4),
- which characterise discrete positions, together with
- a marking device (7)
- for fastening to the lift shaft,
- which has a reference marking (7),
- which covers a region of the code markings
- at least partially, in particular completely,
- transversely of the extent of the code strip,
- and which has a colour
- which corresponds to a code colour,
- in particular in order to assign this to a code colour,
- in particular has only one colour
- which in particular corresponds to the darker code colour
- which is in particular black.

9. The coding device according to claim 8, **characterised in that**
- the reference marking
- is formed by a surface
- which is located obliquely to the surface of the code strip, such that a beam of light extending perpendicularly to the code strip is not reflected back perpendicularly from the surface,
- in particular is at an angle of 20 to 80 degrees, in particular of 45 to 80 degrees to the surface of the code strip,
- in particular is of roof-shaped construction.

10. The coding device according to one of preceding claims 8 to 9, **characterised in that**
- the marking device comprises
- a mounting device (7)
- for longitudinally mobile mounting of the code strip in the lift shaft.

11. The coding device
- according to one of claims 8 to 10,
- **characterised in that** said device is configured for carrying out the computer-implemented method according to one of the preceding claims.

12. The computer-implemented method
- according to one of claims 1 to 7,
- **characterised in that** the coding device according to one of claims 8 to 11 is used.

13. A position determination device
- for determining the position of a lift car in a lift shaft, comprising:
- the coding device according to one of claims 8 to 11,
- a detection device (1)
- for optically reading out the code markings
- together with a computer
- for carrying out the computer-implemented method according to one of claims 1 to 7 or 12.

14. The position determination device according to claim 13, **characterised in that**
- the capture device is configured
- for capturing a pixel image including
- at least one position pattern and
- at least part of the reference marking.

## Revendications

1. Procédé mis en oeuvre par ordinateur
- de détermination de la position d'une cabine d'ascenseur dans une cage d'ascenseur
- comprenant un traitement d'image
- par enregistrement optique
- d'un segment de la bande de code et
- d'au moins un segment d'un dispositif de repérage fixé à la cage d'ascenseur,
- afin d'obtenir une image pixellisée (K) constituée de pixels
- et une analyse de modèle de position
- par identification des repères de code (5, 6) dans l'image pixellisée,
- par identification d'un modèle de position à partir des repères de code,
- par conversion du modèle de position en un code binaire et
- décodage du code binaire pour obtenir une position
- et une analyse de repères de référence
- par lecture d'au moins une ligne de l'image pixellisée ou des repères de code dans la zone où des repères de code sont attendus,
- par conversion des pixels ou groupes de pixels adjacents lus pour fournir des codes numériques respectifs, en particulier en niveaux de gris,
- par comparaison des codes numériques ou des sommes des codes numériques à une valeur seuil et
- par identification d'un repère de référence en fonction de cette comparaison.

2. Procédé mis en oeuvre par ordinateur selon la revendication 1,
- comprenant l'attribution de position
- par affectation d'une position pour le repère de référence
- en fonction de la position d'un modèle de position,
- dans lequel l'identification du repère de référence et le décodage de la position sont effectués sur la base de la même image pixellisée.

3. Procédé mis en oeuvre par ordinateur selon une des revendications précédentes, **caractérisé en ce**
- **que** l'image pixellisée est une image en niveaux de gris.

4. Procédé mis en oeuvre par ordinateur selon une des revendications précédentes, **caractérisé en ce**
- **que** l'identification du repère de code est effectué à l'aide d'une valeur seuil de niveaux de gris par conversion en une image en noir et blanc.

5. Procédé mis en oeuvre par ordinateur selon une des revendications précédentes, **caractérisé en ce**
- **qu'**un enregistrement de la position d'un repère de référence est effectué à différents moments.

6. Procédé mis en oeuvre par ordinateur selon une des revendications précédentes, **caractérisé en ce**
- **qu'**une comparaison des positions affectées à un repère de référence à différents moments est effectuée.

7. Procédé mis en oeuvre par ordinateur selon une des revendications précédentes, **caractérisé en ce**
- **qu'**une correction de la position décodée d'un repère de code est effectuée en fonction de la comparaison des positions affectées à un repère de référence aux différents moments.

8. Dispositif de codage
- destiné à la détermination de la position d'une cabine d'ascenseur dans une cage d'ascenseur, comprenant :
- une bande de code (2)
- le repère de code optique présente
- au moins deux couleurs de code
- en particulier avec différentes valeurs de gris
- en particulier noir et blanc,
- qui forment un modèle de position
- en particulier sous forme de code à barres et/ou de code en 2D (4),
- qui caractérisent des positions distinctes, ainsi
- qu'un dispositif de repérage (7),
- destiné à être fixé à la cage d'ascenseur
- qui présente un repère de référence (7),
- qui recouvre une zone du repère de code
- au moins partiellement, en particulier totalement,
- transversalement à l'extension de la bande de code
- et qui présente une couleur
- correspondant à la couleur de code,
- notamment afin d'affecter une couleur de code à celle-ci,
- en particulier ne présente qu'une couleur,
- qui correspond à la couleur de code la plus sombre,
- qui est en particulier le noir.

9. Dispositif de codage selon la revendication 8, **caractérisé en ce**
- **que** le repère de référence
- est formé par une surface,
- qui est oblique par rapport à la surface de la bande de code, de sorte qu'un rayon lumineux s'étendant perpendiculairement à la bande de code soit réfléchi par la surface de manière non perpendiculaire,
- en particulier présente un angle de 20 à 80 degrés, en particulier de 45 à 80 degrés par rapport à la surface de la bande de code,
- en particulier est conçu en forme de toit.

10. Dispositif de codage selon une des revendications précédentes 8 à 9, **caractérisé en ce**
- **que** le dispositif de repérage
- comprend un dispositif de support (7)
- pour le support mobile au plan longitudinal de la bande de code dans la cage d'ascenseur.

11. Dispositif de codage
- selon une des revendications 8 à 10,
- **caractérisé en ce que** celui-ci est conçu pour la réalisation d'un procédé mis en oeuvre par ordinateur selon une des revendications précédentes.

12. Procédé mis en oeuvre par ordinateur
- selon une des revendications 1 à 7,
- **caractérisé en ce qu'**un dispositif de codage selon une des revendications 8 à 11 est utilisé.

13. Dispositif de détermination de position
- pour la détermination de la position d'une cabine d'ascenseur dans une cage d'ascenseur, comprenant :
- un dispositif de codage selon une des revendications 8 à 11,
- un dispositif de détection (1),
- pour la lecture optique du repère de code
- ainsi qu'un calculateur
- pour la réalisation d'un procédé mis en oeuvre par ordinateur selon une des revendications 1 à 7 ou 12.

14. Dispositif de détermination de position selon la revendication 13, **caractérisé en ce**
- **que** le dispositif d'enregistrement
- est conçu pour l'enregistrement d'une image pixellisée comprenant
- au moins un modèle de position et
- au moins une partie du repère de référence.
